# EUROPÄISCHE PATENTANMELDUNG

(11) **EP 2 334 138 A1**
(43) Veröffentlichungstag der Anmeldung: **15.06.2011**
(21) Anmeldenummer: 09178731.7
(22) Anmeldetag: 10.12.2009
(51) Int. Cl.: H04W 84/18, H01L 31/042

(54) **Drahtloses Kommunikationsnetz über eine definierte Gruppe von Teilnehmern**

(71) Anmelder: SMA Solar Technology AG, 34266 Niestetal (DE)
(72) Erfinder: Magnussen, Dr. Björn, 34131, Kassel (DE); Börger, Stefan, 34130, Kassel (DE); Schmidt, Stefan, 34308, Bad Emstal (DE); Thiel, Raimund, 34596, Bad Zwesten (DE)
(74) Vertreter: Rehberg, Bernhard Frank

(57) **Zusammenfassung**

Zum Aufbauen eines drahtlosen Kommunikationsnetzes (2) zwischen mehreren vordefinierten Teilnehmern (1, 5), wobei die Teilnehmer (1, 5) räumlich verteilt angeordnete Wechselrichter (1) zum Einspeisen elektrischer Energie umfassen und jeweils eine begrenzte räumliche Reichweite bei der drahtlosen Kommunikation aufweisen, wird ein Assimilierungsschritt durchgeführt, in dem sich die vordefinierten Teilnehmer (1, 5) untereinander vernetzen und jeweils ihre individuelle Gerätekennung übermitteln und in dem eine Teilnehmerliste mit den Gerätekennungen aller an dem Assimilierungsschritt beteiligten Teilnehmer (1, 5) in jedem dieser Teilnehmer (1, 5) persistent abgespeichert wird. Nach dem Assimilierungsschritt vernetzt sich jeder Teilnehmer (1, 5) nur noch mit solchen anderen Teilnehmern (1, 5), deren Gerätekennungen in der in ihm abgespeicherten Teilnehmerliste enthalten sind.

## Beschreibung

Die Erfindung bezieht sich auf ein Verfahren zum Aufbauen eines drahtlosen Kommunikationsnetzes zwischen mehreren vordefinierten Teilnehmern, wobei die Teilnehmer räumlich verteilt angeordnete Wechselrichter zur Einspeisung elektrischer Energie beispielsweise in ein Wechselstromnetz umfassen und jeweils eine begrenzte räumliche Reichweite bei der drahtlosen Kommunikation aufweisen. Weiterhin bezieht sich die Erfindung auf eine Funkschnittstelle für einen Teilnehmer eines drahtlosen Kommunikationsnetzes, das mehrere Wechselrichter zur Einspeisung elektrischer Energie umfasst und das insbesondere nach diesem Verfahren aufgebaut, wobei die Funkschnittstelle eine begrenzte räumliche Reichweite bei der drahtlosen Kommunikation hat.

Auf den genauen Typ des drahtlosen Kommunikationsnetzwerks kommt es für die vorliegende Erfindung nicht an. Dies bedeutet jedoch nicht, dass alle Typen von drahtlosen Kommunikationsnetzen gleichermaßen gut für die Realisierung der vorliegenden Erfindung geeignet sind. Beispielsweise sind solche Kommunikationsnetze, die auf Infrarottechnik basieren und daher einen Sichtkontakt zwischen den einzelnen Teilnehmern erfordern, grundsätzlich weniger gut geeignet, als funkbasierte Kommunikationsnetzwerke. Bei einem funkbasierten Kommunikationsnetzwerk erweist es sich als günstig, auf einen erprobten Standard zurückzugreifen. Dies kann beispielsweise der Bluetooth-Standard sein, bei dem die Reichweite der einzelnen Teilnehmer von typischerweise 10 m ohne Verstärker und bis zu 100 m mit Verstärker reicht.

Die vorliegende Erfindung betrifft nicht beliebige drahtlose Kommunikationsnetze, sondern nur solche, zu deren Teilnehmern Wechselrichter zum Einspeisen elektrischer Energie, beispielsweise von Quellen regenerativer Energie, insbesondere von Windkraftanlagen und Photovoltaikgeneratoren, zählen. Weitere Teilnehmer eines solchen Kommunikationsnetzes können sogenannte Repeater sein, um räumlich weiter entfernte Teilnehmer trotz ihrer begrenzten räumlichen Reichweite bei der drahtlosen Kommunikation sicher miteinander zu vernetzen. Auch Datenlogger können in ein solches Kommunikationsnetz eingebunden sein. Typischerweise ermöglicht es das Kommunikationsnetz einer Steuereinrichtung, über einen der Teilnehmer auf alle in dem Kommunikationsnetzwerk verfügbaren Daten zuzugreifen und über das Kommunikationsnetz Befehle an dessen einzelne Teilnehmer zu verteilen.

### STAND DER TECHNIK

Die DE 10 2007 005 665 A1 offenbart ein Kommunikationssystem für das drahtlose Übertragen von Daten über Funkstrecken. Bei diesem Kommunikationssystem wird ein Kommunikationsnetzwerk ausgehend von einem Wurzelknoten als Multi-Hop-Netzwerk ausgebildet, wobei die Kommunikation zwischen den einzelnen Knoten nach dem Bluetooth-Standard erfolgt. Der Wurzelknoten ist dabei ein ausgezeichneter Teilnehmer des Kommunikationsnetzwerks, der sich mit räumlich benachbarten Teilnehmern vernetzt, die sich wiederum mit ihnen räumlich benachbarten weiteren Teilnehmern vernetzen, wobei sie selbst weitere Knoten des Netzwerks ausbilden. Das Kommunikationsnetzwerk bildet sich so mit einer Baumstruktur aus, die aber nicht geordnet sein muss, d. h. die logische Anordnung der Knoten kann von einer funktionellen Hierarchie der Teilnehmer abweichen und auch bei jedem Neuaufbau des Kommunikationsnetzes beispielsweise aufgrund variabler Beeinträchtigung einzelner Funkverbindungen variieren.

Die DE 10 2007 005 665 A1 befasst sich nicht damit, wie bei einem Aufbau des Kommunikationsnetzes erkannt wird, ob ein Gerät, das sich in der direkten Reichweite des Wurzelknotens oder in dessen indirekten Reichweite über andere Knoten hinweg befindet, ein gewünschter Teilnehmer des aufzubauenden Kommunikationsnetzes ist oder nicht. In der praktischen Anwendung des bekannten Kommunikationssystems wird für die Definition der Teilnehmer des jeweiligen Kommunikationsnetzes in der jeweiligen Funkschnittstelle ein Schalter vorgesehen, der auf verschiedene Werte gesetzt werden kann. In das ausgehend von einem Wurzelknoten aufgebaute Kommunikationsnetz werden dabei nur solche Teilnehmer eingebunden, bei denen der Schalter in ihrer Funkschnittstelle auf denselben Wert wie in dem Wurzelknoten eingestellt wurde.

Mit zunehmender Dichte installierter Photovoltaikanlagen ergibt sich die Gefahr, dass benachbarte Photovoltaikanlagen einander überschneidende Reichweiten bei der drahtlosen Kommunikation aufweisen. Bei zufällig gleicher Einstellung der Schalter für die Netzidentifikation in den Funkschnittstellen der jeweiligen Teilnehmer kommt es dann zur ungewollten Vernetzung zwischen benachbarten Kommunikationsnetzen. Bei noch weiter zunehmender Dichte erreicht die begrenzte Anzahl möglicher Schalterstellungen zur Netzidentifikation in den Funkschnittstellen auch dann nicht aus, wenn die einander bezüglich ihrer Reichweite bei der drahtlosen Kommunikation überschneidenden Photovoltaikanlagen gezielt auf unterschiedliche Netzidentifikationen gesetzt werden.

### AUFGABE DER ERFINDUNG

Der Erfindung liegt daher die Aufgabe zugrunde, ein Verfahren und eine Funkschnittstelle der eingangs beschriebenen Art aufzuzeigen, die sicherstellen, dass der Aufbau eines drahtlosen Kommunikationsnetzes immer nur über die jeweils gewünschten Teilnehmer erfolgt, ohne dass dies zu einem erhöhten Einrichtaufwand bei der Installation beispielsweise einer neuen Photovoltaikanlage oder eines neuen Bestandteils einer bestehenden Photovoltaikanlage führt.

### LÖSUNG

Die Aufgabe der Erfindung wird durch ein Verfahren mit den Merkmalen des unabhängigen Patentanspruchs 1 und durch eine Funkschnittstelle mit den Merkmalen des unabhängigen Patentanspruchs 13 gelöst. Bevorzugte Ausführungsformen des neuen Verfahrens sind in den abhängigen Patentansprüchen beschrieben. Hieraus resultieren auch bevorzugte Ausführungsformen der neuen Funkschnittstelle. Eine solche bevorzugte Ausführungsformen der neuen Funkschnittstelle ist in dem abhängigen Patentanspruch 14 definiert. Patentanspruch 15 betrifft einen Wechselrichter mit der neuen Funkschnittstelle.

### BESCHREIBUNG DER ERFINDUNG

Bei dem neuen Verfahren zum Aufbauen eines drahtlosen Kommunikationsnetzes wird für einen begrenzten Zeitraum ein Assimilierungsschritt ausgeführt, in dem mindestens eine Netzkennung definiert und in jedem an dem Assimilierungsschritt beteiligten Teilnehmer persistent abgespeichert wird, und dass sich jeder Teilnehmer nach dem Assimilierungsschritt ausschließlich mit solchen anderen Teilnehmern vernetzt, in denen aus demselben Assimilierungsschritt stammende Netzkennungen abgespeichert sind. D. h., nach dem Assimilierungsschritt stehen die möglichen Teilnehmer an dem drahtlosen Kommunikationsnetz fest. Die Kommunikation zwischen den Teilnehmern mag - wie bei den Wechselrichtern einer Photovoltaikanlage des Nachts - unterbrochen werden, aber auch bei dem Wiederaufbau des Netzes wird die Vernetzung auf die Teilnehmer beschränkt in denen aus demselben Assimilierungsschritt stammende Netzkennungen abgespeichert sind. Dies ist gleichbedeutend damit, dass auch innerhalb der räumlichen Reichweite bei der drahtlosen Kommunikation, nachdem der Assimilierungsschritt für ein erstes Kommunikationsnetz durchgeführt wurde, ein zweites Kommunikationsnetz zwischen anderen Teilnehmern aufgebaut werden kann, ohne dass es zu ungewollten Vernetzungen zwischen den beiden Kommunikationsnetzen kommt. Bei Automatisierung des Assimilierungsschritts, die, wie sich aus den nachfolgenden Erläuterungen ergibt, problemlos zu realisieren ist, bedeutet die Durchführung des neuen Verfahrens bei der Installation einer neuen Anlage keinen höheren Aufwand als bisher.

Die mindestens eine Netzkennung kann z. B. in Abhängigkeit von einer individuellen Gerätekennung mindestens eines an dem Assimilierungsschritt beteiligten Teilnehmers und/oder dem Zeitpunkt des Assimilierungsschritts definiert wird. Im einfachsten Fall handelt es sich bei der Netzkennung um die Gerätekennung eines an dem Assimilierungsschritt beteiligten Teilnehmers, bspw. eines als Wurzelknoten des Kommunikationsnetzes vorgesehenen Teilnehmers, oder um die kleinste oder größte Gerätekennung von allen Teilnehmern des Assimilierungsschritts oder um den absoluten Zeitpunkt des Assimilierungsschritts, bspw. in Form des Datums und der Uhrzeit des Endes des Assimilierungsschritts, oder um irgendeinen aus diesen und/oder anderen Daten generierten Code, wie beispielsweise die Summe der Gerätekennungen von allen Teilnehmern des Assimilierungsschritts.

Typischerweise vernetzen sich die vordefinierten Teilnehmer während des Assimilierungsschritts untereinander und die Netzkennung wird zwischen den vernetzten Teilnehmern während des Assimilierungsschritts übertragen.

In einer bevorzugten Ausführungsform des neuen Verfahrens übermitteln die untereinander vernetzten Teilnehmer während des Assimilierungsschrittes zunächst jeweils ihre individuelle Gerätekennung. Hieraus wird dann eine Teilnehmerliste mit den Gerätekennungen aller an dem Assimilierungsschritt beteiligten Teilnehmer erstellt, die als Netzkennung in jedem der Teilnehmer persistent abgespeichert wird. Nach dem Assimilierungsschritt vernetzt sich jeder Teilnehmer nur noch mit solchen Teilnehmern, deren Gerätekennungen in der in ihm abgespeicherten Teilnehmerliste enthalten sind.

Die Kontrolle der Zugehörigkeit eines Teilnehmers zu einem Kommunikationsnetz kann in dieser Ausführungsform des neuen Verfahrens noch verbessert werden, indem zusätzlich dazu, ob er in der Teilnehmerliste eines mit ihm in Kontakt tretenden Teilnehmers des Kommunikationsnetzes enthalten ist, abgefragt wird, ob in diesem Teilnehmer auch dieselbe Teilnehmerliste abgespeichert ist. Dies kann beispielsweise durch Abgleichen einer aus den Einträgen in die Teilnehmerliste berechneten Prüfsumme geschehen. Die gesamte Teilnehmerliste muss hierzu nicht zwischen den in Kontakt tretenden Geräten ausgetauscht werden. Es ist festzustellen, dass das neue Verfahren nur in begrenztem Maße dazu vorgesehen ist und geeignet ist, Datensicherheit zu gewährleisten, d. h. unbefugten Zugriff auf Daten innerhalb des Kommunikationsnetzwerks zu verhindern. Es geht mehr darum, mehrere sich bezüglich ihrer Reichweite bei der drahtlosen Kommunikation räumlich überschneidenden Netzwerke im Betrieb zuverlässig gegeneinander abzugrenzen.

In dem Assimilierungsschritt kann die Teilnehmerliste des Kommunikationsnetzwerks ebenso wie jede andere Netzkennung in einem ausgezeichneten Teilnehmer erstellt und von dort aus an alle anderen auf der Teilnehmerliste stehenden Teilnehmer übermittelt werden. Bei diesem ausgezeichneten Teilnehmer kann es sich um einen solchen handeln, von dem aus der Assimilierungsschritt aus gestartet wird. Diese Funktionen müssen aber nicht zusammenfallen. So kann der Start des Assimilierungsschrittes von jedem der vordefinierten Teilnehmer aus erfolgen und die Netzkennung bzw. die Teilnehmerliste kann beispielsweise in dem Teilnehmer erstellt werden, der den Wurzelknoten des Kommunikationsnetzes ausbildet.

Das neue Verfahren kann auch einen Korrekturschritt umfassen, in dem die Teilnehmerliste, beispielsweise durch externen Zugriff mit einer Steuereinheit auf den ausgezeichneten Teilnehmer, in dem die Teilnehmerliste erstellt wird, verändert wird. Auf diese Weise können beispielsweise einzelne Teilnehmer, die sich vernetzt haben, die aber nicht zu dem gewünschten Kommunikationsnetz gehören sollen, manuell ausgeschlossen werden.

Wenn bei einer Anlage, über die sich ein Kommunikationsnetz erstreckt, das nach dem neuen Verfahren aufgebaut wurde, ein Teil, der zugleich einen Teilnehmer des Kommunikationsnetzes darstellt, ausgetauscht oder ergänzt wird, kann ein solcher Teilnehmer manuell in der Teilnehmerliste ergänzt und diese Teilnehmerliste dann an alle Teilnehmer verteilt werden oder eine andere Netzkennung manuell in dem neuen Teilnehmer abgespeichert werden. Bevorzugt ist es jedoch in einem solchen Fall, den Assimilierungsschritt zu wiederholen. Dabei können Teilnehmerlisten in den einzelnen Teilnehmern des bisherigen Kommunikationsnetzes um den neuen Teilnehmer ergänzt werden, oder die bisherigen Teilnehmerlisten oder anderen Netzkennungen werden gelöscht, und der Aufbau des Kommunikationsnetzes erfolgt mit einem Assimilierungsschritt so, als handele es sich um eine insgesamt neue Anlage.

Um den Assimilierungsschritt automatisiert durchzuführen, kann er beispielsweise durch das erste Einschalten eines ausgezeichneten vordefinierten Teilnehmers, der als Wurzelknoten für das gewünschte Kommunikationsnetz dienen soll, nach Inbetriebnahme der Anlage ausgelöst werden. Wichtig ist aber auch, dass der Assimilierungsschritt definiert endet. Er kann dazu beispielsweise nach diesem Einschalten für einen begrenzten Zeitraum laufen. Ein Restzeitraum dieses Zeitraums kann dabei immer dann auf eine definierte Zeitspanne verlängert werden, wenn sich ein neuer vordefinierter Teilnehmer vernetzt. Statt durch das Einschalten der einzelnen Teilnehmer kann der Assimilierungsschritt auch durch ein Betätigen eines speziellen Schalters an den einzelnen Teilnehmern ausgelöst werden.

Es ist auch möglich, die Teilnehmerliste auf eine vorgegebene Anzahl von Teilnehmern zu begrenzen und den Assimilierungsschritt zu beenden, wenn diese Anzahl von Teilnehmern vernetzt ist. In aller Regel steht die Anzahl der Teilnehmer des gewünschten Kommunikationsnetzes fest und ist leicht zu ermitteln, vor allem leichter als die einzelnen Gerätekennungen dieser gewünschten Netzteilnehmer.

Bei dem neuen Verfahren können sich auch in dem Assimilierungsschritt nur solche Teilnehmer untereinander vernetzen, die vordefinierte Kriterien einhalten. Hierzu gehört, dass sie überhaupt in der Lage sind, sich an dem neuen Verfahren zu beteiligen, indem sie einen persistenten Speicher für die Teilnehmerliste aufweisen. Diese Teilnehmerliste sollte dann - als Zeichen dafür, dass der jeweilige Teilnehmer derzeit zu keinem Kommunikationsnetz gehört - leer sein. Weitere Möglichkeiten der Vordefinition der möglichen Teilnehmer an dem Kommunikationsnetz bestehen darin, dass - beispielsweise durch Schalter in den jeweiligen Funkschnittstellen - identische Netzidentifikationen festgelegt sind. Ein einfaches und praktikables Mittel der Vordefinition besteht auch darin, dass eine vordefinierte Maximalzeit nach dem ersten Einschalten des jeweiligen Teilnehmers oder dem Löschen des persistenten Speichers des Teilnehmers für die Teilnehmerliste noch nicht abgelaufen ist. Die Gefahr einer ungewollten Vernetzung zwischen Teilnehmern zweier Anlagen, über die hinweg jeweils getrennte Kommunikationsnetze aufgebaut werden sollen, reduziert sich damit auf den unwahrscheinlichen Fall, dass bei diesen der Assimilierungsschritt gleichzeitig und unter denselben Voraussetzungen durchgeführt wird. Die Wahrscheinlichkeit dieses Falls ist um ein Vielfaches geringer als die Wahrscheinlichkeit, dass es im Stand der Technik zu einem unerwünschten Vermischen von Teilnehmern zweier benachbarter Kommunikationsnetzwerke kommt.

In der erfindungsgemäßen Funkschnittstelle für einen Teilnehmer eines drahtlosen Kommunikationsnetzes, das mehrere Wechselrichter zur Einspeisung elektrischer Energie umfasst und insbesondere nach dem neuen Verfahren aufgebaut ist, wobei die Funkschnittstelle eine begrenzte räumliche Reichweite aufweist, ist erfindungsgemäß ein persistenter Speicher für mindestens eine Netzkennung vorgesehen ist, die während eines Assimilierungsschritts an dem der Teilnehmer beteiligt ist, definiert wird, wobei sich der Teilnehmer nach dem Assimilierungsschritt ausschließlich mit solchen anderen Teilnehmern vernetzt, in denen aus demselben Assimilierungsschritt stammende Netzkennungen abgespeichert sind.

An der Funkschnittstelle kann ein Schalter vorgesehen sein, mit dem eine Löschung des Speichers für die mindestens eine Netzkennung und/oder die Teilnahme des Teilnehmers an dem Assimilierungsschritt auslösbar ist.

Konkret kann die Funkschnittstelle Teil eines Wechselrichters zur Einspeisung elektrischer Energie sein.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Die Erfindung wird im Folgenden anhand von Ausführungsbeispielen unter Bezugnahme auf die beigefügte Zeichnung näher erläutert und beschrieben.

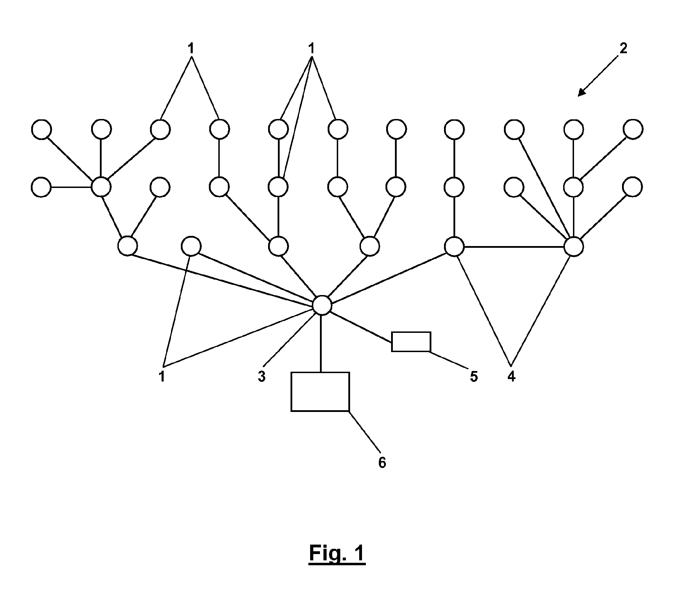

- Fig. 1: skizziert ein Kommunikationsnetzwerk, das ausgehend von einem Teilnehmer, der als Wurzelknoten fungiert, zwischen einer Mehrzahl von Teilnehmern baumartig ausgebildet ist, wobei weitere Teilnehmer ebenfalls als Knoten des Kommunikationsnetzwerks dienen. Dabei greift eine externe Steuereinrichtung über den Wurzelknoten auf das Kommunikationsnetzwerk zu.

### FIGURENBESCHREIBUNG

In Fig. 1 stellen all Kreise Wechselrichter 1 dar, mit denen elektrische Energie beispielsweise von Photovoltaikgeneratoren in ein Wechselstromnetz eingespeist wird. Zwischen diesen Wechselrichtern 1 ist ein drahtloses Kommunikationsnetz 2 ausgebildet, wobei dieses Kommunikationsnetz 2 baumartig von einem als Wurzelknoten 3 fungierenden Wechselrichter 1 ausgeht und sich von dort als Multi-Hop-Netzwerk über alle weiteren Wechselrichter 1 erstreckt. Dabei dienen auch andere Wechselrichter 1 als Knoten 4, an denen sich das Kommunikationsnetz 2 verzweigt. Neben den Wechselrichtern 1 ist ein Datenlogger 5 als Teilnehmer in das Kommunikationsnetzwerk 2 eingebunden. Eine externe Steuereinrichtung 6 greift über den Wurzelknoten 3 auf das Kommunikationsnetz 2 zu, ist aber selbst nicht Teilnehmer des Kommunikationsnetzes 2. Das Kommunikationsnetz 2 ist drahtlos, d. h. die Verbindungen zwischen den einzelnen Teilnehmern 1, 5, die in Fig. 1 durch Striche angedeutet sind, sind Funkverbindungen, beispielsweise nach dem Bluetooth-Standard. Hierzu weisen die einzelnen Teilnehmer 1, 5 jeweils eine Funkschnittstelle nach diesem Standard auf. Um das Kommunikationsnetz 2 bezüglich seiner Teilnehmer 1, 5 abzuschließen, so dass beispielsweise in räumlicher Nähe oder sogar Überschneidung mit dem Kommunikationsnetz 2 ein weiteres Kommunikationsnetz gleichen Typs ausgebildet werden kann, ohne dass diese Kommunikationsnetze miteinander kollidieren, wird nach dem erstmaligen Einschalten aller Teilnehmer 1, 5 ein Assimilierungsschritt durchgeführt, in dem als Netzkennung für das gewünschte Kommunikationsnetz eine Teilnehmerliste aller Teilnehmer 1, 5 erstellt, an alle Teilnehmer 1, 5 übermittelt und in allen Teilnehmern 1, 5 persistent abgespeichert wird. Nach diesem Assimilierungsschritt vernetzen sich die Teilnehmer 1, 5 nur noch mit solchen anderen Teilnehmern 1, 5, die zum Einen in der in ihnen enthaltenen Teilnehmerliste aufgeführt sind und in denen zum Anderen dieselbe Teilnehmerliste abgespeichert ist. Über die externe Steuerung 6 kann die Teilnehmerliste manipuliert werden, indem einzelne Teilnehmer gezielt gestrichen oder hinzugefügt werden. Nach Austausch eines Teilnehmers 1, 5 oder Erweiterung der Anlage um einen neuen Teilnehmer kann der Assimilierungsschritt aber auch erneut durchgeführt werden, so dass es keiner Manipulation der Teilnehmerliste bedarf. In der Teilnehmerliste sind die einzelnen Teilnehmer 1, 5 mit einer Gerätekennung aufgeführt, die individuell für das einzelne Gerät ist. Hierbei handelt es sich typischerweise um eine IP-Adresse, die jedem Gerät individuell zugeordnet ist. Auch in dem Assimilierungsschritt werden nicht beliebige Geräte in das Kommunikationsnetz 2 eingebunden, die nach dem jeweils verwendeten Kommunikationsstandard überhaupt zur Kommunikation mit den Teilnehmern 1, 5 nach dem Bluetooth-Standard in der Lage wären. Vielmehr beschränkt sich auch in dem Assimilierungsschritt die Vernetzung auf solche Teilnehmer 1, 5, die überhaupt einen Speicher zum Ablegen einer Teilnehmerliste haben. Die Vordefinition der möglichen Teilnehmer an dem Kommunikationsnetzwerk 2 kann darüber hinaus darin bestehen, dass diese Teilnehmer erst für einen begrenzten Zeitraum eingeschaltet sind, noch keine Teilnehmerliste gespeichert haben und/oder auf eine identische Netzidentifikation von mehreren wählbaren Netzidentifikationen eingestellt sind. Durch die persistente Speicherung der Teilnehmerliste in jedem einzelnen Teilnehmer 1, 5 des Kommunikationsnetzwerks 2 bleibt die Gruppe der Teilnehmer 1, 5 auch dann geschlossen, wenn das Kommunikationsnetz 2 vorübergehend ausgeschaltet wird oder sich einzelne Teilnehmer 1, 5 vorübergehend aus dem Kommunikationsnetz 2 abmelden, weil beispielsweise ein aus einem Photovoltaikgenerator gespeister Wechselrichter 1 über Nacht abschaltet. Wenn ein solcher Teilnehmer 1 wieder einschaltet, kann er sich aufgrund der übereinstimmenden Teilnehmerlisten wieder mit den weiteren Teilnehmern 1, 5 des Kommunikationsnetzes 2 vernetzen, und zwar unabhängig davon, mit welchem der anderen Teilnehmer 1, 5 er Kontakt aufnimmt. So ist die konkrete Baumstruktur des Kommunikationsnetzes 2, die sich beispielsweise bei einem Kommunikationsnetz 2 nach dem Bluetooth-Standard ergibt, davon abhängig, in welcher zeitlichen und räumlichen Abfolge ein Pairing zwischen den einzelnen Teilnehmern 1, 5 erfolgt.

### BEZUGSZEICHENLISTE

- 1: Wechselrichter
- 2: Kommunikationsnetz
- 3: Wurzelknoten
- 4: Knoten
- 5: Datennogger
- 6: Steuereinrichtung

## Patentansprüche

1. Verfahren zum Aufbauen eines drahtlosen Kommunikationsnetzes (2) zwischen mehreren vordefinierten Teilnehmern (1, 5), wobei die Teilnehmer (1, 5) räumlich verteilt angeordnete Wechselrichter (1) zur Einspeisung elektrischer Energie umfassen und jeweils eine begrenzte räumliche Reichweite bei der drahtlosen Kommunikation aufweisen, **dadurch gekennzeichnet, dass** für einen begrenzten Zeitraum ein Assimilierungsschritt ausgeführt wird, in dem mindestens eine Netzkennung definiert und in jedem an dem Assimilierungsschritt beteiligten Teilnehmer (1, 5) persistent abgespeichert wird, und dass sich jeder Teilnehmer (1, 5) nach dem Assimilierungsschritt ausschließlich mit solchen anderen Teilnehmern (1, 5) vernetzt, in denen aus demselben Assimilierungsschritt stammende Netzkennungen abgespeichert sind.

2. Verfahren nach Anspruch 1, **dadurch gekennzeichnet, dass** die mindestens eine Netzkennung in Abhängigkeit von einer individuellen Gerätekennung mindestens eines an dem Assimilierungsschritt beteiligten Teilnehmers (1, 5) und/oder dem Zeitpunkt des Assimilierungsschritts definiert wird.

3. Verfahren nach Anspruch 1 oder 2, **dadurch gekennzeichnet, dass** in jedem an dem Assimilierungsschritt beteiligten Teilnehmer (1, 5) dieselbe Netzkennung abgespeichert wird.

4. Verfahren nach Anspruch 1, 2 oder 3, **dadurch gekennzeichnet, dass** sich die vordefinierten Teilnehmer (1, 5) in dem Assimilierungsschritt untereinander vernetzen.

5. Verfahren nach Anspruch 4, **dadurch gekennzeichnet, dass** vordefinierten Teilnehmer (1, 5) in dem Assimilierungsschritt jeweils ihre individuelle Gerätekennung übermitteln und dass in dem Assimilierungsschritt eine Teilnehmerliste mit den Gerätekennungen aller an dem Assimilierungsschritt beteiligten Teilnehmer (1, 5) als Netzkennung definiert und in jedem dieser Teilnehmer (1, 5) persistent abgespeichert wird, wobei sich jeder Teilnehmer (1, 5) nach dem Assimilierungsschritt nur noch mit solchen anderen Teilnehmern (1, 5) vernetzt, deren Gerätekennungen in der in ihm abgespeicherten Teilnehmerliste enthalten sind.

6. Verfahren nach Anspruch 5, **dadurch gekennzeichnet, dass** die Teilnehmerliste auf eine vorgegebene Anzahl von Teilnehmern (1, 5) begrenzt wird.

7. Verfahren nach Anspruch 5 oder 6, **dadurch gekennzeichnet, dass** die Teilnehmerliste (1, 5) in dem Assimilierungsschritt in einem der Teilnehmer (1, 5) erstellt und von dort aus an alle anderen auf der Teilnehmerliste stehenden Teilnehmer (1, 5) übermittelt wird.

8. Verfahren nach einem der Ansprüche 5 bis 7, **gekennzeichnet durch** einen Korrekturschritt, in dem die Teilnehmerliste von einer auf einen der Teilnehmer (1, 5) des Kommunikationsnetzes (2) zugreifenden Steuerreinrichtung (6) aus verändert, an alle Teilnehmer (1, 5) übertragen und dort persistent gespeichert wird.

9. Verfahren nach einem der Ansprüche 1 bis 8, **gekennzeichnet durch** einen Ergänzungsschritt, in dem die Teilnehmerliste um einen Teilnehmer (1, 5) erweitert und an alle Teilnehmer (1, 5) übertragen und dort persistent gespeichert wird.

10. Verfahren nach einem der Ansprüche 1 bis 9, **dadurch gekennzeichnet, dass** der Assimilierungsschritt von einem der vordefinierten Teilnehmer (1, 5), insbesondere von einem als Wurzelknoten (3) des Kommunikationsnetzes vorgesehenen Teilnehmer (1 , 5), aus gestartet wird.

11. Verfahren nach einem der Ansprüche 4 bis 10, **dadurch gekennzeichnet, dass** ein Restzeitraum des begrenzten Zeitraums auf eine vordefinierte Zeitspanne verlängert wird, wenn sich ein weiterer Teilnehmer vernetzt.

12. Verfahren nach einem der Ansprüche 1 bis 11, **dadurch gekennzeichnet, dass** die Teilnehmer (1, 5) für den Assimilierungsschritt vordefiniert werden durch:
- einen Speicher zum Abspeichern der Teilnehmerliste und/oder
- eine leere Teilnehmerliste und/oder
- eine identisch eingestellte Netzidentifikation und/oder
- eine noch nicht abgelaufene vorgegebene Maximalzeit nach dem ersten Einschalten und/oder
- eine noch nicht abgelaufene vorgegebene Maximalzeit nach dem Löschen der Teilnehmerliste und/oder
- eine noch nicht abgelaufene vorgegebene Maximalzeit nach dem Betätigen eines Schalters.

13. Funkschnittstelle für einen Teilnehmer (1, 5) eines drahtlosen Kommunikationsnetzes, das mehrere Wechselrichter zur Einspeisung elektrischer Energie umfasst, insbesondere aufgebaut nach dem Verfahren nach einem der vorangehenden Ansprüche, wobei die Funkschnittstelle eine begrenzte räumliche Reichweite aufweist, **dadurch gekennzeichnet, dass** ein persistenter Speicher für mindestens eine Netzkennung vorgesehen ist, die während eines Assimilierungsschritts an dem der Teilnehmer beteiligt ist, definiert wird, wobei sich der Teilnehmer (1, 5) nach dem Assimilierungsschritt ausschließlich mit solchen anderen Teilnehmern (1, 5) vernetzt, in denen aus demselben Assimilierungsschritt stammende Netzkennungen abgespeichert sind.

14. Funkschnittstelle nach Anspruch 13, **dadurch gekennzeichnet, dass** ein Schalter vorgesehen ist, mit dem eine Löschung des Speichers für die mindestens eine Netzkennung und/oder die Teilnahme des Teilnehmers (1, 5) an dem Assimilierungsschritt auslösbar ist.

15. Wechselrichter zur Einspeisung elektrischer Energie mit einer Funkschnittstelle nach Anspruch 13 oder 14.
